(19) Europäisches Patentamt
European Patent Office
Office européen des brevets

(11) **EP 1 756 203 B2**

(12) **NOUVEAU FASCICULE DE BREVET EUROPEEN**
Après la procédure d'opposition

(45) Date de publication et mention de la décision concernant l'opposition:
**03.08.2016 Bulletin 2016/31**

(45) Mention de la délivrance du brevet:
**29.02.2012 Bulletin 2012/09**

(21) Numéro de dépôt: 05739563.4

(22) Date de dépôt: **15.03.2005**

(51) Int Cl.:
*C08J 3/03* (2006.01)   *C08J 3/12* (2006.01)

(86) Numéro de dépôt international:
**PCT/FR2005/000618**

(87) Numéro de publication internationale:
**WO 2005/100454 (27.10.2005 Gazette 2005/43)**

(54) **EMULSION SECHEE, SON PROCEDE DE PREPARATION, ET SES UTILISATIONS**

GETROCKNETE EMULSION, HERSTELLUNGSVERFAHREN DAFÜR UND VERWENDUNG DAVON

DRIED EMULSION, METHOD FOR THE PRODUCTION THEREOF, AND ITS USES

(84) Etats contractants désignés:
**AT BE BG CH CY CZ DE DK EE ES FI FR GB GR HU IE IS IT LI LT LU MC NL PL PT RO SE SI SK TR**

(30) Priorité: **15.03.2004 FR 0402646**

(43) Date de publication de la demande:
**28.02.2007 Bulletin 2007/09**

(73) Titulaire: **RHODIA CHIMIE**
**92512 Boulogne Billancourt Cedex (FR)**

(72) Inventeurs:
• **DEROO, Sophie**
**F-94240 L'HAY LES ROSES (FR)**
• **SENACHAL, Alain**
**F-94220 CHARENTON (FR)**
• **MERCIER, Jean-Michel**
**60270 GOUVIEUX (FR)**
• **MARTIN, Nadia**
**F-69006 LYON (FR)**

(74) Mandataire: **Cardon, Flavie et al**
**RHODIA OPERATIONS**
**Direction de la Propriété Industrielle**
**40, rue de la Haie-Coq**
**93306 Aubervilliers Cedex (FR)**

(56) Documents cités:
EP-A2- 0 228 657    WO-A-02/32563
WO-A-03/002242    WO-A-03/006148
WO-A1-96//22159    US-A- 4 209 417
US-A- 4 405 747    US-A- 5 473 013
US-A- 5 863 862    US-A- 6 129 906
US-A1-2003/0 087 788    US-A1-2004/0 170 657

• **Product Data Sheet of Rhodasurf ROX, mai 2010**
• **Brochure Kuraray, juin 2003**
• **C.A. FINCH: 'Polyvinyl Alcohol - Properties and Applications', 1973, JOHN WILEY & SONS, LONDON pages 91 - 120**

EP 1 756 203 B2

**EP 1 756 203 B2**

**Description**

La présente invention a pour objet une émulsion séchée. Elle a plus précisément pour objet une émulsion séchée comprenant une phase hydrophobe liquide et une matrice polymérique hydrosoluble ou hydrodispersable dont la teneur en phase hydrophobe est élevée. L'invention a également pour objet un procédé de préparation de l'émulsion séchée, et des utilisations de ladite émulsion.

Les émulsions séchées sont des compositions comprenant une phase hydrophobe liquide dispersée dans une matrice solide. Elles sont susceptibles d'être obtenues par séchage d'une émulsion comprenant une phase aqueuse dans laquelle est dispersée la phase hydrophobe liquide, la phase aqueuse comprenant le composé hydrosoluble ou hydrodispersable qui constituera toute ou partie de la matrice après séchage. Des compositions sous forme d'émulsions séchées et leurs procédés de préparation sont connus de l'homme du métier. Les émulsions séchées se présentent généralement sous forme de poudre ou de granulés.

On connaît ainsi des émulsions séchées comprenant une matrice de polymère électrolyte, par exemple un polymère d'acide acrylique, tel que décrit dans le document WO 97/15385 (R 95139G1). On connaît également des émulsions séchées dont la matrice comprend un polymère comprenant des unités hydrophiles et des unités comprenant des groupes ou greffons hydrophobes, tel que décrit dans les documents WO 00/26280 (R 98145), WO 02/32563 (R 00137), et WO 03/006148 (R 01103). Ce dernier document, WO 03/006148, envisage une répartition des unités sous forme statistique ou sous forme de blocs et met en oeuvre en pratique des copolymères statistiques avec un faible rapport pondéral entre la phase hydrophobe et la matrice. Les émulsions de ce document sont peu concentrées en phase hydrophobe et comprennent une quantité importante de matrice.

On connaît également des émulsions séchées dont la matrice est un amidon éventuellement modifié, tel que décrit dans le document WO 99/55819 ou dans le document US 3971852. L'utilisation d'autres matrices est également décrite dans les documents WO 97/15386 (R 95140), WO 97/15387 (R 95141), WO 99/38611 (R 98011) et WO 99/38945 (R 98010). On connaît également l'utilisation d'alcool polyvinylique.

Le document WO 03/002242 décrit le séchage d'émulsions comprenant une phase hydrophobe dispersée dans une phase aqueuse comprenant une forte teneur en sel d'isopropylammonium de glyphosate et un copolymère à blocs amphiphile. Un tel séchage mène à une matrice comprenant une très forte teneur en sel. La présence de telles teneurs en sels est généralement inutile, donc coûteuse, pour les applications auxquelles les émulsions séchées sont destinées. Elle influe de plus sur le comportement de la matrice. On préfère souvent éviter la présence de fortes teneurs en sels.

Les émulsions séchées sont généralement destinées à être dispersées dans une composition aqueuse pour obtenir une émulsion comprenant la phase hydrophobe dispersée dans la composition aqueuse. Les émulsion séchées peuvent ainsi faciliter ou rendre économique la manipulation et/ou le transport et/ou la vectorisation et/ou la protection de la phase hydrophobe. Les émulsions séchées peuvent ainsi être formulées avec d'autres composés solides et être mises en présence d'eau par l'utilisateur final. On peut ainsi par exemple réaliser des mélanges de poudres. C'est le cas par exemple pour certaines compositions phytosanitaires, et pour des formulations détergentes en poudres ou granulés. Les émulsions séchées peuvent également être mises en présence d'eau par un opérateur préparant une formulation aqueuse comprenant la phase hydrophobe. On note aussi qu'il peut être intéressant de déclencher la re-dispersion par un facteur externe (par exemple un changement de pH, de température, de composition chimique de l'environnement, par la libération de substances aqueuses telles que l'urine ou la sueur...) ou de contrôler la cinétique de la re-dispersion.

Des qualités d'une émulsion séchée incluent: une re-dispersion aisée dans l'eau, pas de coalescence de la phase hydrophobe non miscible à l'eau pendant le séchage et/ou à la redispersion, une bonne coulabilité de poudre, une forme aisément manipulable, par exemple non huileuse. La matrice des émulsions séchées a parfois en elle même peu d'utilité dans la formulation ou l'utilisation finale. En revanche elle constitue une aide au moins temporaire très appréciable. Le champ d'application des émulsions séchées est donc limité par la quantité et la nature (et donc le coût) de la matrice, en balance avec le bénéfice apporté. Plus la quantité de matrice est importante, moins l'intérêt de cette aide est avéré. Jusqu'à maintenant on ne connaissait pas d'émulsions séchées pouvant comprendre moins de 30% en poids de matrice tout en présentant une forme aisément manipulable et/ou des propriétés de re-dispersion satisfaisantes.

On a à présent trouvé de nouvelles émulsions séchées permettant de résoudre des difficultés mentionnées ci-dessus et d'élargir leurs champs d'applications.

Ainsi l'invention propose une émulsion séchée comprenant une matrice comprenant un polymère hydrosoluble ou hydrodispersable, dans laquelle est dispersée une phase hydrophobe liquide, caractérisée en ce que:

- le polymère hydrosoluble ou hydrodispersable compris dans la matrice est un copolymère dibloc A-B ou tribloc A-B-A, dont le bloc A est hydrophyle et le bloc B est hydrophobe, seul ou en mélange avec un autre polymère hydrosoluble ou hydrodispersable,
- le rapport pondéral entre la phase hydrophobe et la matrice est supérieur à 50/50, de préférence supérieur à 70/30, de préférence supérieur à 80/20, et

- la matrice comprend au moins 50% en poids de polymère hydrosoluble ou hydrodispersable, de préférence au moins 80% en poids.

De préférence, la matrice ne comprend pas plus de 20%, de préférence pas plus de 10%, en poids d'un sel.

L'invention a également propose également un procédé de préparation de telles émulsions, et des utilisations.

Définitions

Dans la présente demande, par polymère hydrosoluble ou hydrodispersable, on entend un polymère qui à concentration de 10% en poids dans de l'eau, à une température de 25°C, ne présente pas de séparation macroscopique de phase. Dans la présente demande la qualité hydrosoluble ou hydrodispersable s'entend au pH de préparation de l'émulsion séchée et/ou au pH d'utilisation de l'émulsion séchée lors de la re-dispersion. Dans la présente demande, par phase hydrophobe, on entend un composé ou une composition comprenant plusieurs composés, non miscible à l'eau (formant une séparation macroscopique de phases), à une concentration de 10% en poids, à une température de 25°C. Dans la présente demande la qualité de phase hydrophobe ou hydrodispersable s'entend au pH de préparation de l'émulsion séchée et/ou au pH d'utilisation de l'émulsion séchée lors de la re-dispersion.

Dans la présente demande, on désigne par unité dérivant d'un monomère une unité qui peut être obtenue directement à partir dudit monomère par polymérisation. Ainsi, par exemple, une unité dérivant d'un ester d'acide acrylique ou méthacrylique ne couvre pas une unité de formule $-CH_2-CH(COOH)-$, $-CH_2-C(CH_3)(COOH)-$, $-CH_2-CH(OH)-$, respectivement, obtenue par exemple en polymérisant un ester d'acide acrylique ou méthacrylique, ou de l'acétate de vinyle, respectivement, puis en hydrolysant. Une unité dérivant d'acide acrylique ou méthacrylique couvre par exemple une unité obtenue en polymérisant un monomère (par exemple un ester d'acide acrylique ou méthacrylique), puis en faisant réagir (par exemple par hydrolyse) le polymère obtenu de manière à obtenir des unités de formule $-CH_2-CH(COOH)-$, ou $-CH_2-C(CH_3)(COOH)-$. Une unité dérivant d'un alcool vinylique couvre par exemple une unité obtenue en polymérisant un monomère (par exemple un ester vinylique), puis en faisant réagir (par exemple par hydrolyse) le polymère obtenue de manière à obtenir des unités de formule $-CH_2-CH(OH)-$.

Dans la présente demande, sauf mention contraire, les masses molaires moyennes sont des masses molaires moyennes en nombre, mesurées par chromatographie d'exclusion stérique dans un solvant approprié, couplée à un détecteur de diffusion de lumière multi-angle (GPC-MALLS). Dans la présente demande, on peut aussi se référer à des masses molaires moyennes théoriques, déterminées à partir des masses de constituants utilisés pour préparer les polymères.

Typiquement, la masse molaire moyenne théorique M d'un bloc, d'une chaîne latérale, d'un squelette, de chaînes périphériques, ou d'un coeur est cal culée selon la formule suivante:

$$M = \sum_i M_i * \frac{n_i}{n'_{precursor}},$$

où $M_i$ est la masse molaire d'un monomère i, $n_i$ est le nombre de moles du monomère i, $n_{precursor}$ est le nombre de moles d'un composé auquel sera liée la chaîne macromoléculaire du bloc, chaîne latérale, squelette, chaîne périphérique, ou coeur. Ce composé peut être Un agent de transfert (ou un groupe de transfert) ou un amorceur, un bloc précédent etc. S'il s'agit d'un bloc précédent, le nombre de moles peut être considéré comme le nombre de moles d'un composé auquel la chaîne macromoléculaire dudit bloc précédent a été liée, par exemple un agent de transfert (ou un groupe de transfert) ou un amorceur.

Dans la présente demande, le terme « bloc hydrophobe» est utilisé dans son sens usuel de «qui n'a pas d'affinité pour l'eau»; cela signifie qu'un polymère dont le bloc est constitué, pris seul (de même composition et de même masse molaire), formerait une solution macroscopique diphasique dans de l'eau distillée à 25°C, à une concentration supérieure à 1 % en poids.

Dans la présente demande, le terme «bloc hydrophile» est également utilisé dans son sens usuel de «qui a de l'affinité pour l'eau», cela signifie que le bloc n'est pas susceptible de former une solution macroscopique diphasique dans de l'eau distillée à 25°C à une concentration supérieure à 1% en poids.

Ingrédients de l'émulsion séchée

L'émulsion séchée comprend une matrice comprenant un polymère hydrosoluble ou hydrodispersable, dans laquelle est dispersée une phase hydrophobe liquide. La phase hydrophobe liquide est présente sous forme d'inclusions (gouttelettes) dans la matrice, avantageusement d'une taille moyenne comprise entre 0,1 et 50 $\mu$m, de préférence entre

1 et 10 μm, par exemple entre 1 et 5 μm (déterminée à l'aide d'un granulomètre à diffraction laser HORIBA). La taille moyenne peut varier selon l'application finale.

On détaille ci-dessous différents ingrédients pouvant entrer dans la composition de l'émulsion sèche.

Phase hydrophobe

La phase hydrophobe peut comprendre toutes sortes de composés, seuls ou en mélanges, éventuellement en solution ou en dispersion dans un solvant hydrophobe. Bien entendu, la phase hydrophobe peut n'être constituée que d'un simple liquide hydrophobe.

On cite à titre d'exemples de phase hydrophobe ou de composés compris dans la phase hydrophobe:

- les silicones, par exemple des huiles et gommes silicones, de type MD, MTD, MQ, éventuellement solubilisées dans des solvants, et éventuellement fonctionna lisées par des groupes tels que des amines, alcools, polyols etc. De tels silicones sont connues de l'homme du métier.
- les parfums.
- les huiles organiques, minérales ou végétales ou minérales, et les dérivés de ces huiles, lesdites huiles et dérivés étant non miscibles à l'eau.
- les solvants organiques non miscibles à l'eau.
- les matières actives non hydrosolubles ou hydrodispersables, éventuellement solubilisées dans un solvant.
- leurs mélanges, en solutions, dispersions, ou émulsions.

Dans le domaine de l'agrochimie, les matières actives phytosanitaires peuvent être choisies parmi la famille des α-cyano-phénoxybenzyl carboxylates ou des α-cyano-halogénophénoxy-carboxylates, la famille des N-méthylcarbonates comprenant des substituants aromatiques, les matières actives telles que Aldrin, Azinphos-methyl, Benfluralin, Bifenthrin, Chlorphoxim, Chlorpyrifos, Fluchloralin, Fluroxypyr, Dichloruos, Malathion, Molinate, Parathion, Permethrin, Profenofos, Propiconazole, Prothiofos, Pyrifenox, Butachlor, Metolachlor, Chlorimephos, Diazinon, Fluazifop-P-butyl, Heptopargil, Mecarbam, Propargite, Prosulfocarb, Bromophos-ethyl, Carbophenothion, Cyhalothrin, Novaluron, Deltamétrine, Pendimethalin. Les matières actives phytosanitaires peuvent être mises en oeuvre en présence d'additifs classiques, choisis par exemple parmi les adjuvants permettant d'augmenter l'efficacité de la matière active, les agents anti-mousses, les agents anti-mottants, des charges, hydrosolubles ou non.

On peut de même citer en tant que matières actives convenables dans le domaine des formulations phytosanitaires, les huiles végétales, minérales, les huiles silicones, les anti-mousses silicones, etc.

A titre d'exemples de matières actives utilisables dans le domaine de la cosmétique on peut citer les huiles silicones appartenant notamment à la famille des diméthicones ; les vitamines lipophiles, comme la vitamine A et ses dérivés, la vitamine B2, l'acide pantothénique, la vitamine D et la vitamine E ; les mono-, di- et triglycérides ; les parfums ; les bactéricides ; les agents absorbeurs d'UV, comme les dérivés aminobenzoate de typé PABA et PARA, les salicylates, les cinnamates, les anthranilates, les dibenzoylméthanes, les dérivés du camphre et leurs mélanges.

Les agents anti-vieillissement peuvent de même être utilisés. A titre d'exemples de tels agents on peut citer notamment citer les rétinoïdes, les acides α- et β- hydroxy, leurs sels et leurs esters, les vitamines liposolubles, le palmitate d'ascorbyle, les céramides, les pseudo-céramides, les phospholipides, les acides gras, les alcools gras, le cholestérol, les stérols et leurs mélanges. Comme acides gras et alcools préférés, on peut plus particulièrement citer ceux possédant des chaînes alkyles, linéaires ou ramifiées contenant de 12 à 20 atomes de carbone. Il peut notamment s'agir d'acide linoléique.

On peut de même mettre en oeuvre des agents anti-cellulite, tels que notamment l'isobutylméthylxanthine et la théophyline ; ainsi que des agents anti-acné, comme par exemple le résorcinol, l'acétate de résorcinol, le peroxyde de benzoyle et de nombreux composés naturels.

Les arômes, parfums, huiles essentielles, essences, peuvent aussi être utilisés en tant que matière active hydrophobe. A titre d'exemple, on peut citer les huiles et/ou essences de menthe, de menthe verte, de menthe poivrée, de menthol, de vanille, de cannelle, de laurier, d'anis, d'eucalyptus, de thym, de sauge, de feuille de cèdre, de noix de muscade, de citrus (citron, citron vert, pamplemousse, orange), de fruits (pomme, poire, pêche, cerise, prune, fraise, framboise, abricot, ananas, raisin, etc.), seules ou en mélanges.

Les agents anti-microbiens peuvent être choisis parmi le thymol, le menthol, le triclosan, le 4-hexylrésorcinol, le phénol, l'eucalyptol, l'acide benzoïque, le peroxyde benzoïque, le parabène de butyle, et leurs mélanges.

A titre d'exemples de matières actives convenables à l'invention et utilisables dans le domaine des peintures, on peut citer les résines alkydes, les résines époxy, les isocyanates bloqués ou non.

Dans le domaine du papier, on peut citer entre autres les résines telles que le dimère d'alkylcétène (AKD) ou l'anhydride alcényle succinique (ASA).

Dans le domaine de la détergence, on peut mentionner en tant que matière active possible, les silicones aminées en tant qu'agent adoucissant, les anti-mousses silicones, les agents anti-microbiens, les parfums, huiles et essences, etc. A ce titre, on pourra se référer à la liste des composés de ce type, indiqués dans le cadre de matières actives pour le domaine de la cosmétique.

Parmi les matières actives hydrophobes convenables, on peut aussi mentionner:

- les huiles/graisses/cires organiques d'origine animale ou d'origine végétale ; les huiles/cires minérales ;
- les produits issus de l'alcoolyse des huiles précitées ;
- les mono-, di- et tri- glycérides ;
- les acides gras, saturé ou non, comprenant 10 à 40 atomes de carbone; les esters de tels acides et .d'alcool comprenant 1 à 6 atomes de carbone;
- les monoalcools, saturés ou non, comprenant 8 à 40 atomes de carbone;

ces composés étant utilisés seuls ou en mélange.

Comme huiles / graisses / cires organiques d'origine animale, on peut citer en autres, l'huile de cachalot, l'huile de baleine, l'huile de phoque, l'huile de squale, l'huile de foie de morue, les graisses de porc, de mouton (suifs), le perhydrosqualène, la cire d'abeille, seules ou en mélange.

A titres d'exemples d'huiles / graisses / cirés organiques d'origine végétale, on peut mentionner, entre autres, l'huile de colza, l'huile de tournesol, l'huile d'arachide, l'huile d'olive, l'huile de noix, l'huile de maïs, l'huile de soja, l'huile d'avocat, l'huile de lin, l'huile de chanvre, l'huile de pépins de raisin, l'huile de coprah, l'huile de palme, l'huile dé graines de coton, l'huile de palmiste, l'huile de babassu, l'huile de jojoba, l'huile de sésame, l'huile de ricin, l'huile de macadamia, l'huile d'amande douce, la cire de carnauba, le beurre de karité, le beurre de cacao, le beurre de cacahuète, seuls ou en mélange.

En ce qui concerne les huiles / cires minérales, on peut citer entre autres les huiles naphténiques, paraffiniques (vaseline), isoparaffiniques, les cires paraffiniques, seules ou en mélange.

Les produits issus de l'alcoolyse des huiles précitées peuvent aussi être utilisés.

Concernant les acides gras, ces derniers, saturés ou non, comprennent 10 à 40 atomes de carbone, plus particulièrement 18 à 40 atomes de carbone, et peuvent comprendre une ou plusieurs insaturations éthyléniques, conjuguées ou non. Il est à noter que lesdits acides peuvent comprendre un ou plusieurs groupements hydroxyles.

Comme exemples d'acides gras saturés, on peut citer les acides palmitique, stéarique, isostéarique, béhénique.

Comme exemples d'acides gras insaturés, on peut citer les acides myristoléique, palmitoléique, oléique, érucique, linoléique, linolénique, arachidonique, ricinoléique, ainsi que leurs mélanges.

Pour ce qui a trait aux esters d'acides gras, on peut citer les esters des acides précédemment listés, pour lesquels la partie dérivant de l'alcool comprend 1 à 6 atomes de carbone, comme les esters méthyliques, éthyliques, de propyliques, isopropyliques, etc.

On mentionne que la phase hydrophobe peut comprendre une phase intermédiaire non miscible à l'eau dans laquelle est dispersée une phase interne non miscible à la phase intermédiaire ou non soluble dans-à la phase intermédiaire. Dans ce cas on peut parler d'émulsion multiple séchée.

On mentionne que la phase hydrophobe peut être constituée d'une huile silicone, notamment une huile silicone aminée, dans laquelle est solubilisée un parfum, un arôme ou une essence.

Bien entendu, il n'est pas exclu que l'émulsion séchée comprenne plusieurs phase hydrophobes différentes dispersées la matrice, consistant deux populations d'inclusions.

Polymère hydrosoluble ou hydrodispersable

Le copolymère à blocs hydrosoluble ou hydrodispersable est un copolymère dibloc A-B ou tribloc A-B-A, dont le bloc A est hydrophile et le bloc B est hydrophobe.

Si la matrice comprend un mélange du copolymère à blocs et d'un autre polymère hydrosoluble ou hydrodispersable, la proportion en poids de copolymère à blocs dans le mélange peut être inférieure à 50%.

Le copolymère à blocs ou le mélange peut être présenté notamment sous forme de poudre, sous forme de dispersion dans un liquide ou sous forme de solution dans un solvant (eau ou autre).

Bloc hydrophile A

Le bloc A comprend des unités hydrophiles, non-ioniques, ioniques (cationiques, anioniques, potentiellement cationiques, potentiellement anioniques ou zwitterioniques) ou potentiellement ioniques, dérivées de monomères hydrophiles, non-ioniques, ioniques ou potentiellement ioniques. Le bloc A peut aussi comprendre des unités hydrophobes dérivées d'au moins un monomère hydrophobe, en quantité suffisamment faible pour conserver au bloc un caractère hydrophile. Cette quantité peut aller jusqu'à 10% molaire de l'ensemble des monomères dont dérive le bloc A.

Par unités $A_C$ cationiques ou potentiellement cationiques, on entend des unités qui comprennent un groupe cationique ou potentiellement cationique. Les unités ou groupes cationiques sont des unités ou groupes qui présentent au moins une charge positive (généralement associée à un ou plusieurs anions comme l'ion chlorure, l'ion bromure, un groupe sulfate, un groupe méthylesulfate), quel que soit le pH du milieu où est présent le copolymère. Les unités ou groupes potentiellement cationiques sont des unités ou groupes qui peuvent être neutres ou présenter au moins une charge positive selon le pH du milieu où est présent le copolymère. Dans ce cas on parlera d'unités potentiellement cationiques $A_C$ sous forme neutre ou sous forme cationique. Par extension on peut parler de monomères cationiques ou potentiellement cationiques.

Par unités $A_A$ anioniques ou potentiellement anioniques, on entend des unités qui comprennent un groupe anionique ou potentiellement anionique. Les unités ou groupes anioniques sont des unités ou groupes qui présentent au moins une charge négative (généralement associée à un ou plusieurs cations comme des cations de composés alcalins ou alcalino-terreux, par exemple le sodium, ou groupes cationiques comme l'ammonium), quel que soit le pH du milieu où est présent le copolymère. Les unités ou groupes potentiellement anioniques sont des unités ou groupe qui peuvent être neutres ou présenter au moins une charge négative selon le pH du milieu où est présent le copolymère. Dans ce cas on parlera de d'unités potentiellement anioniques $A_A$ sous forme neutre ou sous forme anionique. Par extension on peut parler de monomères anioniques ou potentiellement anioniques.

Par unités $A_N$ neutres, on entend des unités qui ne présentent pas de charge, quel que soit le pH du milieu où est présent le copolymère.

A titre d'exemples de monomères hydrophiles non-ioniques, on peut mentionner:

- les hydroxyalkylesters d'acides $\alpha$-$\beta$ éthyléniquement insaturés comme les acrylates et méthacrylates d'hydroxyéthyle, d'hydroxypropyle, le glycérol monométhacrylate...
- les amides $\alpha$-$\beta$ éthyléniquement insaturés comme l'acrylamide, le N,N-diméthyl méthacrylamide, le N-méthylolacrylamide ...
- les monomères $\alpha$-$\beta$ éthyléniquement insaturés portant un segment polyoxyalkyléné hydrosoluble du type polyoxyde d'éthylène, comme les polyoxyde d'éthylène $\alpha$-méthacrylates (BISOMER S20W, S10W, ... de LAPORTE) ou $\alpha,\omega$-diméthacrylates, le SIPOMER BEM de RHODIA (méthacrylate de polyoxyéthylène $\omega$-béhényle), le SIPOMER SEM-25 de RHODIA (méthacrylate de polyoxyéthylène w-tristyrylphényle) ...
- les monomères $\alpha$-$\beta$ éthyléniquement insaturés précurseurs d'unités ou de segments hydrophiles tels que l'acétate de vinyle qui, une fois polymérisés, peuvent être hydrolysés pour engendrer des unités alcool vinylique ou des segments alcool polyvinylique
- les vinylpyrrolidones
- les monomères $\alpha$-$\beta$ éthyléniquement insaturés de type uréido et en particulier le méthacrylamido de 2-imidazolidinone éthyle (Sipomer WAM II de RHODIA).

Des exemples de monomères ioniques ou potentiellement ioniques pouvant être mis en oeuvre en quantité mineure sont mentionnés plus loin (concernant la partie A).

A titre d'exemples de monomères hydrophiles potentiellement cationiques (dont peuvent dériver des unités $A_C$), on peut mentionner :

- les N,N(dialkylaminowalkyl)amides d'acides carboxyliques $\alpha$-$\beta$ monoéthyléniquement insaturés comme le N,N-diméthylaminométhyl -acrylamide ou -méthacrylamide, le 2(N,N-diméthylamino)éthyl-acrylamide ou - méthacrylamide, le 3(N,N-diméthylamino)propyl-acrylamide ou -méthacrylamide, le 4(N,N-diméthylamino)butyl-acrylamide ou -méthacrylamide
- les aminoesters $\alpha$-$\beta$ monoéthyléniquement insaturés comme le 2(diméthyl amino)éthyl acrylate (ADAM), 2(diméthyl amino)éthyl méthacrylate (DMAM), le 3(diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinyl amine
- les vinylimidazolines
- des monomères précurseurs de fonctions amines tels que le N-vinyl formamide, le N-vinyl acétamide, ... qui engendrent des fonctions amines primaires par simple hydrolyse acide ou basique.

A titre d'exemples de monomères hydrophiles cationiques, dont peuvent dériver des unités $A_C$, on peut mentionner :

- les monomères ammoniumacryloyles ou acryloyloxy comme le chlorure de triméthylammoniumpropylméthacrylate, le chlorure ou le bromure de triméthylammoniuméthylacrylamide ou méthacrylamide, le méthylsulfate de triméthylammoniumbutylacrylamide ou méthacrylamide, le méthylsulfate de triméthylammoniumpropylméthacrylamide (MES), le chlorure de (3-méthacrylamidopropyl)triméthylammonium (MAPTAC), le chlorure de (3-acrylamidopropyl) triméthylammonium (APTAC), le chlorure ou le méthylsulfate de méthacryloyloxyéthyl triméthylammonium, le chlorure d'acryloyloxyéthyl triméthylammonium ;

- le bromure, chlorure ou méthylsulfate de 1-éthyl 2-vinylpyridinium, de 1-éthyl 4-vinylpyridinium ;
- les monomères N,N-dialkyldiallylamines comme le chlorure de N,N-diméthyldiallylammonium (DADMAC) ;
- les monomères polyquaternaires comme le chlorure de diméthylaminopropylméthacrylamide,N-(3-chloro-2-hydroxypropyl) triméthylammonium (DIQUAT) ...

Des exemples de monomères non-ioniques (neutres) hydrophiles ou hydrophobes, dont peuvent dériver des unités $A_N$, ont déjà été mentionnés plus haut (concernant la partie B).

A titre d'exemples de monomères anioniques ou potentiellement anioniques, dont peuvent dériver des unités $A_A$, on peut mentionner :

- des monomères possédant au moins une fonction carboxylique, comme les acides carboxyliques $\alpha$-$\beta$ éthyléniquement insaturés ou les anhydrides correspondants, tels que les acides ou anhydrides acrylique, méthacrylique, maleique, l'acide fumarique, l'acide itaconique, le N-méthacroyl alanine, le N-acryloylglycine et leurs sels hydrosolubles
- des monomères précurseurs de fonctions carboxylates, comme l'acrylate de tertiobutyle, qui engendrent, après polymérisation, des fonctions carboxyliques par hydrolyse.
- des monomères possédant au moins une fonction sulfate ou sulfonate, comme le 2-sulfooxyethyl méthacrylate, l'acide vinylbenzène sulfonique, l'acide allyl sulfonique, le 2-acrylamido-2méthylpropane sulfonique, l'acrylate ou le méthacrylate de sulfoethyle , l'acrylate ou le méthacrylate de sulfopropyle et leurs sels hydrosolubles
- des monomères possédant au moins une fonction phosphonate ou phosphate, comme l'acide vinylphosphonique,... les esters de phosphates éthyléniquement insaturés tels que les phosphates dérivés du méthacrylate d'hydroxyéthyle (Empicryl 6835 de RHODIA) et ceux dérivés des méthacrylates de polyoxyalkylènes et leurs sels hydrosolubles

A titre d'exemples de monomères zwitterioniques, dont peuvent dériver des unités $A_Z$, on peut mentionner :

- les monomère sulfobétaïnes comme le sulfopropyl diméthylammonium éthyl méthacrylate (SPE de RASCHIG), le sulfopropyl diméthylammonium propyl méhacrylamide (SPP de RASCHIG), le sulfopropyl 2-vinylpyridinium (SPV de RASCHIG)
- les monomères phosphobétaïnes, comme le phosphatoéthyl triméthylammonium éthyl méthacrylate
- les monomères carboxybétaïnes.

Bloc hydrophobe B

Le bloc B comprend des unités hydrophobes, généralement non-ioniques. Le bloc B peut aussi comprendre des unités hydrophiles dérivées d'au moins un monomère hydrophile, en quantité suffisamment faible pour conserver au bloc un caractère hydrophobe. Cette quantité peut aller jusqu'à 10% molaire de l'ensemble des monomères dont dérive le bloc B.

A titre d'exemples de monomères non-ioniques hydrophobes dont peut dériver la partie B (par exemple bloc B), on peut mentionner :

- les monomères vinylaromatiques tels que styrène, alpha-méthylstyrène, vinyltoluène...
- les halogénures de vinyle ou de vinylidène, comme le chlorure de vinyle, chlorure de vinylidène
- les $C_1$-$C_{12}$ alkylesters d'acides $\alpha$-$\beta$ monoéthyléniquement insaturés tels que les acrylates et méthacrylates de méthyle, éthyle, butyle, acrylate de 2-éthylhexyle ...
- les esters de vinyle ou d'allyle d'acides carboxyliques saturés tels que les acétates, propionates, versatates, stéarates ... de vinyle ou d'allyle
- les nitriles $\alpha$-$\beta$ monoéthyléniquement insaturés contenant de 3 à 12 atomes de carbone, comme l'acrylonitrile, le methacrylonitrile ...
- les $\alpha$-oléfines comme l'éthylène ...
- les diènes conjugués, comme le butadiène, l'isoprène, le chloroprène,
- les monomères susceptibles de générer des chaînes polydiméthylsiloxane (PDMS).

Ainsi la partie B peut être un silicone, par exemple une chaîne polydiméthylsiloxane ou un copolymère comprenant des unités diméthylsiloxy.

Les copolymères selon l'invention peuvent être obtenus par toute méthode connue, que ce soit par polymérisation radicalaire, contrôlée ou non, par polymérisation par ouverture de cycle (notamment anionique ou cationique), par polymérisation anionique ou cationique, ou encore par modification chimique d'un polymère.

De manière préférée, on met en oeuvre des méthodes de polymérisation radicalaire dite vivante ou contrôlée.

A titre d'exemple de procédés de polymérisation dite vivante ou contrôlée, on peut notamment se référer à :

- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioestérs de la demande WO 98/01478,
- le procédé décrit dans la demande WO 02/08307, notamment pour l'obtention de copolymères comprenant des blocs polyorganosiloxane,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiocarbazates de la demande WO 02/26836,
- le procédé de polymérisation radicalaire contrôlée par des agents de contrôle de la demande WO03/082928,
- le procédé de polymérisation radicalaire contrôlée par des agents de contrôle de type dithiophosphoroesters de la demande WO 02/10223,

(éventuellement les copolymères à blocs obtenus comme ci-dessus par polymérisation radicalaire contrôlée, peuvent subir une réaction de purification de leur extrémité de chaîne soufrée, par exemple par des procédés de type hydrolyse, oxydation, réduction, pyrolyse ou substitution)

- le procédé de la demande WO 99/03894 qui met en oeuvre une polymérisation en présence de précurseurs nitroxydes,
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée partransfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- le procédé de polymérisation radicalaire contrôlée par les dérivés du tetraphényléthane,'divulgué par D. Braun et al. Dans Macromol. Symp. 111,63 (1996), ou encore,
- le procédé de polymérisation radicalaire contrôlée par des complexes organocobalt décrit par Wayland et al. Dans J.Am.Chem.Soc. 116,7973 (1994)
- le procédé de polymérisation radicalaire contrôlée par du diphénylethylène (WO 00/39169 ou WO 00/37507).

Le rapport pondéral entre le(s) bloc(s) A et le(s) bloc(s) B est de préférence supérieur ou égal à 50/50. La masse molaire totale comprise entre 1000 et 100000, de préférence entre 2000 et 40000, de préférence entre 3000 et 20000.

Selon des modes de réalisation particulièrement intéressants:

- la phase hydrophobe comprend un ester d'acide gras et le copolymère à blocs est un dibloc comprennant:

  - un bloc A dérivant d'acide acrylique (PAA) et un bloc B dérivant d'acrylate de butyle (PABU) ou,
  - un bloc A dérivant d'acrylamide (PAM) et un bloc B dérivant d'acrylate de butyle (PABU),
  - un bloc A dérivant de d'acide acrylique (PAA) et un bloc B dérivant d'acétate de vinyle (PVAc).

- la phase hydrophobe comprend une silicone et le copolymère à bloc est un dibloc comprennant:

  - un bloc A dérivant d'acide acrylique (PAA) et un bloc B dérivant d'acrylate de butyle (PABU) ou,
  - un bloc A dérivant de polyvinyle pyrrolidone (PVP) et un bloc B dérivant d'acrylate de butyle (PABU).

- la phase hydrophobe comprend une silicone et le copolymère à bloc est un tribloc comprennant deux blocs A dérivant de d'acide acrylique (PAA) et un bloc B polydiméthylorgariosiloxane (PDMS).

A titre d'autres polymères hydrosolubles ou hydrodispersables pouvant être utilisés en mélange, on cite par exemple les copolymères de diisobutylène et d'anhydride maléique (sous forme acide ou sous forme de carboxylates par exemple de carboxylate de sodium), par exemple de Geropon EGPM commercialisé par Rhodia. On cite également les dérivés d'amidon, les polypeptides, l'alcool polyvinylique et ses dérivés, la caséïne. Des polymères hydrosolubles ou hydrodispersables sont notamment décrits dans les documents WO 97/15385 (R 95139G1), WO 00/26280 (R 98145), WO 02/32563 (R00137), WO 03/006148 (R01103), WO 99/55819, US 3971852, WO 97/15386 (R95140), WO 97/15387 (R 95141), WO 99/38611 (R 98011) et WO 99/38945 (R 98010).

Selon un mode de réalisation avantageux, on met en oeuvre un mélange d'un copolymère ("autre copolymère) de diisobutylène et d'anhydride maléique (sous forme acide ou sous forme de carboxylates par exemple de carboxylate de sodium), et d'un copolymère à blocs, dans un rapport en poids (autre copolymère/copolymère à blocs) de préférence compris entre 95/5 et 5/95, de préférence entre 90/10 et 10/90, par exemple environ 80/20. Selon ce mode de réalisation la matrice ne comprend avantageusement pas de sel, ou moins de 10% en poids. On peut observer une synergie entre les deux polymères, en terme de rapport pondéral (élevé) entre la phase hydrophobe et la matrice: il est possible d'atteindre des rapports pondéraux plus élevés avec les mélanges qu'avec les polymères seuls pris isolément. Par ailleurs, la présence de l'autre copolymère permet l'obtention de d'une excellente qualité de poudre (non collante). En fait avec les mélanges on observe un compromis surprenant entre la proportion de phase hydrophobe, la qualité de la poudre, l'aptitude à la re-dispersion, et même éventuellement le coût.

Selon un mode avantageux, la matrice comprend de 5 à 100% en poids du copolymère à blocs et de 0 à 95% en poids d'un autre copolymère hydrosoluble ou hydrodispersable, de préférence un copolymère de diisobutylène et d'anhydride maléique (sous forme acide ou sous forme de carboxylates par exemple de carboxylate de sodium), le total étant de 100%. Ces proportions sont de préférence de 10 à 90 % pour le copolymère à blocs et de 10 à 90% de l'autre polymère; par exemple environ 20% de copolymère à blocs et 80% de l'autre copolymère. Les proportions dans les mélanges peuvent être variées en fonction de la phase hydrophobe, et selon les objectifs à atteindre en matière de re-dispersion (plus de copolymère à blocs), de collage (plus de l'autre copolymère), de quantité de phase hydrophobe (pplus de copolymère à blocs) et éventuellement de coûts.

Emulsifiant supplémentaire

L'émulsion séchée peutcomprendre en plus un émulsifiant, par exemple untensioactif non ionique ou anionique.
Les tensioactifs non ioniques peuvent être choisis parmi les tensioactifs polyalcoxylés non ioniques, tels que par exemple :

- les alcools gras polyalcoxylés ;
- les triglycérides polyalcoxylés ;
- les esters d'acides gras polyalcoxylés ;
- les esters de sorbitan polyalcoxylés ;
- les amides d'acides gras polyalcoxylés ;
- les amines grasses polyalcoxylées ;
- les amidoamines polyacloxylées ;
- les di(phényl-1 éthyl) phénols polyalcoxylés ;
- les tri(phényl-1 éthyl) phénols polyalcoxylés ;
- les alkyl phénols polyalcoxylés ;
- les polysiloxanes polyalcoxylés ;
- les produits résultant de la condensation de l'oxyde d'éthylène ou de l'oxyde de propylène avec l'éthylènèdiamine ;
- les hydrocarbures terpéniques polyalcoxylés ;
- les alkyl polyglycosides polyalcoxylés,

seuls ou en mélanges.
Par (pol y)alcoxylés, on désigne des motifs éthoxylés, propoxylés, ou leurs combinaisons. De préférence, les tensioactifs comprennent des motifs éthoxylés, ou éthoxylés/propoxylés.
Le nombre de motifs éthoxylés (OE) et/ou propoxylés (OP) de ces tensioactifs varie habituellement de 1 à 100, plus particulièrement de 1 à 50.
Les alcools gras OE ou OE/OP comprennent généralement de 6 à 22 atomes de carbone, les motifs OE et OP étant exclus de ces nombres. De préférence, ces motifs sont des motifs éthoxylés (OE).
Les acides gras OE ou OE/OP comprennent notamment de 6 à 22 atomes de carbone, les motifs OE et OP étant exclus de ces nombres. De préférence, ces motifs sont des motifs éthoxylés (OE).
Les triglycérides OE ou OE/OP, de préférence OE, sont plus particulièrement des triglycérides d'origine végétale ou animale, comme par exemple tels que l'huile de lin, l'huile de soja, l'huile de ricin, l'huile de colza, etc.
Les esters d'acides gras OE ou OE/OP comprennent généralement, pour la partie acide, de 6 à 22 atomes de carbone, les motifs OE et OP étant exclus de ces nombres, et sont de préférence éthoxylés (OE).

Les esters de sorbitan OE ou OE/OP, de préférence OE, sont plus particulièrement des esters du sorbitol cyclisé d'acide gras comprenant de 10 à 20 atomes de carbone comme l'acide laurique, l'acide stéarique ou l'acide oléique.

Le terme triglycéride OE ou OE/OP visé dans la présente invention, aussi bien les produits obtenus par alcoxylation d'un triglycéride par l'oxyde d'éthylène et/ou par l'oxyde de propylène que ceux obtenus par transestérification d'un triglycéride par un polyéthylèneg lycol et/ou du polypropylèneglycol.

De même, le terme ester d'acide gras OE ou OE/OP inclut aussi bien les produits obtenus par alcoxylation d'un acide gras par l'oxyde d'éthylène et/ou l'oxyde de propylène que ceux obtenus par transestérification d'un acide gras par un polyéthylèneglycol et/ou polypropylèneglycol.

Les amines et les amides gras OE ou OE/OP ont généralement de 6 à 22 atomes de carbone, les motifs OE et OP étant exclus de ces nombres, et sont de préférence éthoxylées (OE).

Les amidoamines OE ou OE/OP ont habituellement de 2 à 22 atomes de carbone pour les motifs hydrocarbonés, les motifs OE et OP étant exclus de ces nombres, et sont de préférence éthoxylées (OE).

Les alkylphénols OE ou OE/OP sont classiquement 1 ou 2 groupes alkyles, linéaires ou ramifiés, ayant 4 à 12 atomes de carbone. A titre d'exemple on peut citer notamment les groupes octyles, nonyles ou dodécyles.

Les polysiloxanes, de préférence éthoxylés (OE), sont plus particulièrement des polyalkyisiloxanes linéaires ou ramifiés, comprenant 2 à 10 atomes de silicium, et dans lesquels les groupements alkyle sont de préférence des radicaux méthyle.

Les hydrocarbures terpéniques convenables, de préférence OE ou OE/OP, sont notamment ceux dérivés d'α- ou de β- pinènes. Ils ont été décrits dans la demande internationale WO 96/01245.

Les alkylpolyglycosides peuvent être obtenus par condensation du glucose avec des alcools gras primaires présentant un groupe alkyle en $C_4$-$C_{20}$ ainsi qu'un nombre moyen de motifs glucose de l'ordre 0,5 à 3 par mole d'alkylpolyglycoside.

Pour ce qui concerne les tensioactifs anioniques, on peut citer notamment les suivants :

- les alkylesters sulfonates, par exemple de formule $R-CH(SO_3M)-CH_2COOR'$, où R représente un radical hydrocarboné en $C_8$-$C_{20}$, de préférence en $C_{10}$-$C_{16}$, éventuellement porteur d'une ou plusieurs insaturations, R' un radical alkyle en $C_1$-$C_6$, de préférence en $C_1$-$C_3$ et M est un atome d'hydrogène, un cation alcalin (sodium, potassium, lithium) alcalino-terreux (calcium par exemple) ou ammonium non substitué ou substitué (méthyl-, diméthyl-, triméthyl-, tétraméthylammonium, diméthyl pipéridinium ...) ou dérivé d'une alcanolamine (monoéthanolamine, diéthanolamine, triéthanolamine ...). On peut citer tout particulièrement les méthyl ester sulfonates dont le radical R est en $C_{14}$-$C_{16}$ ;
- les alkylesters sulfates, par exemple de formule $R-CH(OSO_3M)-CH_2COOR'$, où R représente un radical hydrocarboné en $C_8$-$C_{20}$, de préférence en $C_{10}$-$C_{16}$, éventuellement porteur d'une ou plusieurs insaturations, R' un radical alkyle en $C_1$-$C_6$, de préférence en $C_1$-$C_3$ et M a la signification ci-dessus ;
- les alkylbenzènesulfonates, plus particulièrement en $C_9$-$C_{20}$, les alkylsulfonates primaires ou secondaires, notamment en $C_8$-$C_{22}$, les alkylglycérol sulfonates ;
- les alkylsulfates par exemple de formule $ROSO_3M$, où R représente un radical alkyle ou hydroxyalkyle en $C_{10}$-$C_{24}$, de préférence en $C_{12}$-$C_{20}$ ; M a la signification ci-dessus ;
- les alkyléthersulfates par exemple de formule $RO(AO)_nSO_3M$ où R représente un radical alkyle ou hydroxyalkyle en $C_{10}$-$C_{24}$, de préférence en $C_{12}$-$C_{20}$ ; OA représentant un groupement éthoxylé et/ou propoxylé ; M a la signification ci-dessus, n variant généralement de 1 à 4, comme par exemple le laurylethersulfate avec n = 2 ;
- les alkylamides sulfates, par exemple de formule $RCONHR'OSO_3M$ où R représente un radical alkyle en $C_2$-$C_{22}$, de préférence en $C_6$-$C_{20}$, R' un radical alkyle en $C_2$-$C_3$, M a la signification ci-dessus, ainsi que leurs dérivés polyalcoxylés (éthoxylés et/ou propoxylés) ;
- les sels d'acides gras saturés ou insaturés, par exemple comme ceux en $C_8$-$C_{24}$, de préférence en $C_{14}$-$C_{20}$ et d'un cation ayant la même définition que M, les N-acyl N-alkyltaurates, les alkyliséthionates, les alkylsuccinamates, les monoesters ou diesters de sulfosuccinates, les N-acyl sarcosinates, les polyéthoxycarboxylates ; et
- les alkyl- ou dialkyl- sulfosuccinates, par exemple comme ceux en $C_6$-$C_{24}$ ; le cation étant de même définition que M ; notamment les dioctylsulfosuccinate de sodium;
- les mono et di esters phosphates, par exemple de formule suivante : $(RO)_x-P(=O)(OM)_x$ ou R représente un radical alkyle, alkylaryle, arylalkyle, aryle, éventuellement polyalcoxylés, x et x' étant égaux à 1 ou 2, à la condition que la somme de x et x' soit égale à 3, M a la signification ci-dessus ; notamment dérivés des alcools gras polyalcoxylés, des di- et tri- (phényl-1 éthyl) phénols polyalcoxylés ; des alkylphénols polyalcoxylés ;

seuls ou en mélanges.

Autres composés

L'émulsion séchée peut comprendre d'autres ingrédients, qui peuvent être utiles lors de sa préparation, ou qui peuvent être utiles pour en moduler les propriétés ou les applications.

Il peut notamment s'agir d'ingrédients actifs (c'est à dire d'ingrédients ayant une fonction lors de l'utilisation, par exemple dans une formulation liquide), compris dans la matrice, et formulables dans une phase aqueuse.

Il peut également s'agir d'agents anti-mousse, d'oses tels que décrits dans le document WO 03/055584 (R 01186), ou de complexants comprenant au moins un des éléments des colonnes IIA, IVA, VA, VIII, IB, et IIIB, permettant de contrôler plus aisément la libération de la phase hydrophobe lors d'une redispersion dans l'eau, comme décrit dans le document WO 03/006148 (R 01103).

L'émulsion séchée peut éventuellement contenir de l'eau résiduelle. La teneur en eau est avantageusement inférieure à 10% en poids, encore plus préférablement inférieure à 3%.

Procédé

Etape a) préparation de l'émulsion

Lors d'une première étape du procédé, on prépare une émulsion comprenant la phase hydrophobe liquide, dispersée dans la phase aqueuse. L'émulsion comprend le polymère hydrosoluble ou hydrodispersable, et éventuellement un émulsifiant en plus.

Toutes les méthodes de préparation d'une émulsion peuvent être utilisées. Elles sont connues de l'homme du métier. Des méthodes sont décrites, par exemple, dans "ENCYCLOPEDIA of EMULSIONS TECHNOLOGY", volumes 1 à 3 de Paul BECHER édités par MARCEL DEKKER INC., 1983, et peuvent être mises en oeuvre dans le cadre de la présente invention.

Ainsi, la méthode dite d'émulsification en phase directe peut être utilisée. Il est rappelé brièvement que cette méthode consiste à préparer un mélange contenant l'eau et des émulsifiants, y compris le polymère hydrosoluble ou hydrodispersable, puis à introduire la phase hydrophobe sous forme liquide, sous agitation.

Une autre méthode convenable est l'émulsification par inversion de phases. Selon cette voie, on mélange la phase hydrophobe avec un émulsifiant on introduit goutte à goutte et sous agitation, l'eau pouvant contenir les autres constituants tels que le polymère hydrosoluble ou hydrodispersable par exemple. A partir d'une certaine quantité d'eau introduite, il se produit une inversion de l'émulsion. On obtient alors une émulsion directe huile dans eau. On dilue ensuite l'émulsion obtenue dans l'eau de manière à obtenir une fraction volumique en phase dispersée appropriée.

On peut enfin préparer l'émulsion en mettant en oeuvre des broyeurs colloïdaux tels que MANTON GAULIN et MICROFLUIDIZER (MICROFLUIDICS).

La taille moyenne des gouttelettes de phase hydrophobe dispersées dans la phase aqueuse est en général comprise entre 0,1 et 50 $\mu$m, souvent entre 1 et 10 micromètres et préférentiellement entre 0,2 et 5 micromètres (exprimée par rapport au volume de particules ; mesurée au moyen d'un granulomètre à diffraction laser de type HORIBA).

L'émulsification peut être réalisée à une température voisine de la température ambiante, bien que des températures plus faibles ou plus élevées soient envisageables.

Selon un premier mode de réalisation, l'émulsion comprend la phase aqueuse, la phase hydrophobe et du polymère hydrosoluble ou hydrodispersable, sans adjonction supplémentaire d'un agent émulsifiant. Dans ce mode de réalisation, le polymère peut avoir une fonction d'émulsifiant, en plus de sa foncti on de matrice future après séchage.

Selon un deuxième mode de réalisation, l'émulsion comprend la phase aqueuse, la phase hydrophobe, du polymère hydrosoluble ou hydrodispersable, et en plus un agent émulsifiant, différent du polymère, par exemple un tensioactif. Dans ce mode de réalisation, l'agent émulsifiant a pour fonction d'aider à l'émulsification, et/ou de participer au contrôle de la taille des gouttelettes de la phase aqueuse. Par ce mode de réalisation il est généralement possible d'obtenir des émulsions dont la taille des gouttelettes de phase hydrophobe est plus restreinte (émulsification plus efficace).

La quantité d'eau présente dans l'émulsion, avant séchage, peut être comprise entre 5 et 99% en poids, de préférence entre 20% et 70% en poids. De manière générale on préfère utiliser de faibles quantités d'eau, car celle-ci doit être éliminée par la suite.

Etapes b) c) d) séchage, mise en forme

La méthode mise en oeuvre pour éliminer l'eau de l'émulsion et obtenir l'émulsion séchée, peut être effectuée par tout moyen connu d e l'homme du métier.

Cette opération a lieu de telle sorte que les divers éléments constitutifs du mélange sont soumis à des températures inférieures à celles de leur dégradation.

Selon un premier mode de réalisation de l'invention, on peut envisager un séchage en étuve. De préférence, ce séchage a lieu en couche mince. Plus particulièrement, la température à laquelle est effectué le séchage est inférieure ou égale à 100°C, de préférence comprise entre 30 et 90°C, de préférence entre 50 et 90°C.

Selon un autre mode de réalisation particulier de l'invention, on effectue un séchage dit rapide, du mélange (ou de l'émulsion). Conviennent à ce titre le séchage par atomisation, en lit fluidisé, mettant en oeuvre des tambours Duprat®, ou une lyophilisation (congélation-sublimation).

Le séchage par atomisation, par exemple à l'aide d'un appareil NIRO, ou en lit fluidisé par exemple à l'aide d'un appareil AEROMATIC, peut s'effectuer de manière habituelle dans tout appareil connu tel que par exemple une tour d'atomisation associant une pulvérisation réalisée par une buse ou une turbine avec un courant de gaz chaud. La température d'entrée du gaz chaud (en général de l'air), en tête de colonne, est de préférence comprise entre 50°C et 250°C et la température de sortie est de préférence inférieure à la température de dégradation des éléments constitutifs du granulé obtenu.

Dans le cas d'opérations de séchage du mélange (ou de l'émulsion) réalisées au moyen de tambour Duprat®, ou de tout moyen permettant d'obtenir rapidement un film sec qui est séparé du support séchant par une opération de raclage par exemple, on obtient des particules que l'on peut éventuellement broyer. Si nécessaire, ces particules peuvent faire l'objet d'une mise en forme ultérieure, comme une étape d'agglomération, de manière à obtenir des granulés.

Il est à noter que des additifs, tels que les agents antimottants peuvent être incorporés aux granulés au moment de cette étape de séchage.

On recommande, à titre d'exemple, d'utiliser une charge choisie notamment parmi le carbonate de calcium, le sulfate de baryum, le kaolin, la silice, la bentonite, l'oxyde de titane, le talc, l'alumine hydratée et le sulfoaluminate de calcium.

De préférence, le séchage est effectué de telle sorte que qu'au moins 90% en poids de la phase aqueuse externe sont éliminés, de préférence entre 90 et 95 % en poids. De préférence, l'eau comprend moins de 0,5 mol/L de sel. La quantité d'eau résiduelle est de préférence inférieure à 3% en poids.

Utilisations:

L'émulsion séchée peut être utilisée:

- dans des formulations phytosanitaires,
- dans des formulations pour le soin du linge, par exemple dans des lessives en poudre ou en tablettes, pour la formulation d'adoucissants, la vectorisation de parfums, la formulation d'antimousses, ou de silicones par exemple pour un dépôt sur des fibres (du linge, typiquement), ou de silicones comprenant des parfums, arômes ou essences, par exemple pour un dépôt sur des fibres (du linge, typiquement),
- dans des formulations pour lave-vaisselle automatique, sous forme de poudres ou tablettes,
- dans des formulations cosmétiques,
- de manière générale dans des articles textiles tissés ou non tissés, plus particulièrement

  - dans des lingettes pour les soins domestiques,

  - dans des lingettes ou pour les soins de la peau

  - dans des lingettes pour le soin des bébés,

  - dans des couches-culotte

  - dans des lingettes de démaquillage,

  - dans des formulations de sels de bains,

- dans des formulations de matériaux de bâtiments et/ou de travaux publics, par exemple pour la formulation de retardateurs ou d'accélérateurs de prise de ciments,
- dans des formulations de revêtements de surfaces, par exemple dans des peintures.
- pour formuler sous forme solide des huiles silicones, par exemple des antimousses.

D'autres détails ou avantages de l'invention apparaîtront au vu des exemples qui suivent sans effet limitatif.

Exemples

Ingrédients:

| Polymère à blocs 1 | PABU-PAA 1 k-4k | Polymère dibloc synthétisés par polymérisation radicalaire contrôlée par un Xanthate |
|---|---|---|
| Polymère à blocs 2 | PABU-PVP 1 k-4k | |
| Polymère à blocs 3 | PAA-PDMS-PAA 7k-1,3k-7k | |
| Polymère comparatif 1 | Alcool polyvinylique | Rhodoviol 25/140, Kuraray |
| Polymère comparatif 2 | Copolymère d'anhydride maléique et de diisobutylene | Geropon EGPM, Rhodia |
| Phase hydrophobe 1 | Huile silicone | Rhodorsil H1669, Rhodia |
| Phase hydrophobe 2 | Huile silicone | Rhodiarsil 47V100, Rhodia |
| Phase Hydrophobe 3 | Résine silicone MDT 0,5 % OH | Rhodorsil4509D, Rhodia |
| Tensioactif 1 | Tensioactif non ionique Trideceth 8 OE | Rhodasurf ROX, Rhodia |
| Phase aqueuse | Eau distillée | |

EXEMPLES 1-3

Des émulsions séchées sont préparées selon l'une des procédures suivantes:

Procédure 1:

- solubiliser le polymère à blocs dans l'eau.

- Ajouter la phase hydrophobe sous agitation avec un agitateur Ultra-turrax tournant à 13500 t/mn. Après addition, poursuivre l'agitation pendant 2 minutes.

- verser l'émulsion obtenue dans une cuve métallique à fonds plat de façon à obtenir une couche d'émulsion de l'ordre de 1 mm d'épaisseur.

- placer la cuve dans une étuve à 70°C jusqu'à élimination maximale de l'eau contenue dans l'émulsion (vérification par pesée à poids constant).

Procédure 2:

- solubiliser le tensioactif dans une partie du poids d'eau.
- Ajouter la phase hydrophobe sous agitation avec un agitateur Ultra-turrax tournant à 13500 t/mn. Après addition, poursuivre l'agitation pendant 2 minutes.
- Procéder à 3 passages de l'émulsion sous une pression de 200 bars dans un homogénéiseur Microfluideur pour abaisser sa granulométrie.
- Ajouter le polymère à blocs préalablement solubilisé dans le reste de l'eau sous agitation (ultra turrax à 9500 t/mn pendant 30 secondes)

- verser l'émulsion obtenue dans une cuve métallique à fonds plat de façon à obtenir une couche d'émulsion de l'ordre de 1 mm d'épaisseur.
- placer la cuve dans une étuve à 70°C jusqu'à élimination maximale de l'eau contenue dans l'émulsion (vérification par pesée à poids constant).

Emulsions avant séchage:

| Ingrédients | Exemple 1 | Exemple 2 | Exemple 3 |
|---|---|---|---|
| Polymère à blocs 1 | 8% en poids | 4,8% en poids | |
| Polymère à blocs 2 | | | 7,4% en poids |
| Tensioactif 1 | | 0,5% en poids | 0,5% en poids |
| Phase hydrophobe 1 | 40% en poids | | |
| Phase hydrophobe 2 | | 38,0% en poids | 37,0% en poids |
| eau | 52% en poids | 56,7% en poids | 55,1 % en poids |

Emulsions séchées

| Ingrédients | Exemple 1 | Exemple 2 | Exemple 3 |
|---|---|---|---|
| Polymère à blocs 1 | 16,7% en poids | 11,1% en poids | |
| Polymère à blocs 2 | | | 16,5% en poids |
| Tensioactif 1 | | 1,1% en poids | 1,1% en poids |
| Phase hydrophobe 1 | 83,3% en poids | | |
| Phase hydrophobe 2 | | 87,8% en poids | 82,4% en poids |
| eau | <3% en poids | <3% en poids | <3% en poids |

Evaluation

| | Exemple 1 | Exemple 2 | Exemple 3 |
|---|---|---|---|
| D50* avant séchage | 1.4 $\mu$m | 0.9 $\mu$m | 0.9 $\mu$m |
| Aspect macroscopique après séchage - Redispersion dans l'eau | Film sec et homogène - pas de coalescence. Redispersion facile. | Film sec et homogène - pas de coalescence. Redispersion facile. | Film légèrement collant et homogène - pas de coalescence. Redispersion facile. |
| D50* après séchage et redispersion* | 1.5 $\mu$m | 1.1 $\mu$m | 0.9 $\mu$m |
| * D50 : diamètre médian des gouttelettes émulsionnées, mesuré avec un granulomètre à diffraction laser HORIBA<br>** Redispersion : Le film d'émulsion séchée est grossièrement broyé (0.5 à 2 $\mu$m). 0,5 g de la poudre obtenue sont ajoutés à 4,5 g d'eau dans un flacon de 10 ml. Le flacon est agité pendant 1 minute par simple retournement. En fin d'agitation, la dispersion est totale. | | | |

EXEMPLES 4-7

Des émulsions à 80% de phase hydrophobe 3 dans eau stabilisées par le polymère à blocs 3 (exemple 4) sont préparées en ajoutant petit à petit la phase hydrophobe 3 dans une solution aqueuse (eau pH 10) polymère à blocs 3 à l'aide d'un Ultra Turrax à 13500trs/mn.

Comparativement, des émulsions de phase hydrophobe 3 à 80% stabilisées par un tensioactif non-ionique classique (tensioactif 1) (exemple comparatif 5) sont préparées en ajoutant petit à petit la phase hydrophobe 3 dans une solution aqueuse de tensioactif 1 à l'aide d'un Ultra Turrax à 13500trs/mn.

Les caractéristiques des émulsions sont résumées dans le tableau ci-dessous :

| Ingrédients | Exemple 4 | Exemple 5 (comparatif) |
|---|---|---|
| Polymère à blocs 3 (% poids/phase hydrophobe) | 5% (9,62 g à 16% dans eau) | |
| Tensioactif 1 (% poids / phase hydrophobe) | | 5% en poids (1,82 g à 85% dans eau) |
| Phase hydrophobe 3 | 30,78 g 80% / émulsion | 30,95 g 80% / émulsion |
| Aspect de l'émulsion | Semi-fluide | Compacte |
| Diamètre moyen (μm) | 4,7 | 0,7 |

La taille moyenne des particules est déterminée à l'aide d'un granulomètre Coulter LS 130.

Ces émulsions sont séchées sur plaque de verre température ambiante et en étuve à 105°C pourformer un film.

Les résultats sont les suivants:

| | Exemple 4 | Exemple comparatif 5 |
|---|---|---|
| Séchage à l'ambiante, aspect du film | Blanc, non collant, cassant | Transparent, mou, huileux |
| Séchage à l'ambiante, visibles au microscope | Oui | Non |
| Séchage en étuve, aspect du film | Blanc, non collant, cassant | Transparent, mou, huileux |
| Séchage en étuve, particules visibles au microscope | Oui | Non |
| Séchage à l'ambiante, Réhydratation du film | Facile | Impossible |
| Séchage en étuve, réhydratation du film | Facile | Impossible |

Les films avant et après rehydratation sont observés à l'aide d'un microscope optique Olympus BX 60 (1 graduation = 8.23 μm)

On réalise de manière similaire des émulsions séchées avec des polymères comparatifs.

| Ingrédients | Exemple 6 (comparatif) | Exemple 7 (comparatif) |
|---|---|---|
| Polymère comparatif 1 (% poids / phase hydrophobe) | 5% (15,4 g à 10% dans eau) | |
| Polymère comparatif 2 (% poids / phase hydrophobe) | | 5% (3,3 g à 16% dans eau) |
| Phase hydrophobe 3 | 30 g 80% / émulsion | 30,78 g 80% / émulsion |
| Aspect de l'émulsion | Compacte | Semi fluide |
| Diamètre moyen (μm) | 3,33 | 6,86 |

La taille moyenne des particules est déterminée à l'aide d'un granulomètre Coulter LS 130.

| | Exemple 6 (Comparatif) | Exemple 7 (Comparatif) |
|---|---|---|
| Séchage à l'ambiante, aspect du film | Semi-transparent, non collant, pas lisse | Transparent, mou, huileux |

(suite)

|  | Exemple 6 (Comparatif) | Exemple 7 (Comparatif) |
|---|---|---|
| Séchage à l'ambiante, particules visibles au microscope | Oui | Oui |
| Séchage en étuve, aspect du film | Semi-transparent, non collant, pas lisse | Transparent, mou, huileux |
| Séchage en étuve, particules visibles au microscope | Non | Oui |
| Séchage à l'ambiante, Réhydratation du film | Facile | Facile, mais huileux, particules regroupées en surface |
| Séchage en étuve, réhydratation du film | Impossible | Facile, mais huileux, particules regroupées en surface |

Les films avant et après rehydratation sont observés à l'aide d'un microscope optique Olympus BX 60 (1 graduation = 8.23 $\mu$m).

**Revendications**

1. Emulsion séchée comprenant une matrice comprenant un polymère hydrosoluble ou hydrodispersable, dans laquelle est dispersée une phase hydrophobe liquide, **caractérisée en ce que**:

   - le polymère hydrosoluble ou hydrodispersable compris dans la matrice est un copolymère dibloc A-B ou tribloc A-B-A, dont le bloc A est hydrophile et le bloc B est hydrophobe, seul ou en mélange avec un autre polymère hydrosoluble ou hydrodispersable,
   - le rapport pondéral entre la phase hydrophobe et la matrice est supérieur à 50/50, de préférence supérieur à 70/30, de préférence supérieur à 80/20, et
   - la matrice comprend au moins 50% en poids de polymère hydrosoluble ou hydrodispersable.

2. Emulsion séchée selon la revendication précédente, **caractérisée en ce qu'**elle comprend en plus un composé émulsifiant.

3. Emulsion séchée selon l'une des revendications précédentes, **caractérisée en ce que** la matrice comprend au moins 80% en poids de polymère hydrosoluble ou hydrodispersable.

4. Emulsion séchée selon l'une des revendications précédentes, **caractérisée en ce que** la matrice ne comprend pas plus de 20%, de préférence pas plus de 10%, en poids d'un sel.

5. Emulsion séchée selon l'une des revendications précédentes, **caractérisée en ce que** la phase hydrophobe comprend un composé choisi parmi:

   - les silicones,
   - les parfums,
   - les huiles organiques, minérales ou végétales ou minérales, et les dérivés de ces huiles, lesdites huiles et dérivés étant non miscibles à l'eau,
   - les solvants organiques non miscibles à l'eau,
   - les matières actives non hydrosolubles ou hydrodispersables,
   - leurs mélanges, en solutions dispersion ou émulsions.

6. Emulsion séchée selon l'une des revendications précédentes **caractérisée en ce que** la phase hydrophobe est une composition comprenant une phase intermédiaire non miscible à l'eau dans laquelle est dispersée une phase interne non miscible à la phase intermédiaire ou non soluble dans la phase intermédiaire.

7. Emulsion séchée selon l'une des revendications précédentes, **caractérisée en ce que** le rapport pondéral entre le(s) bloc(s) A et le(s) bloc(s) B est supérieur ou égal à 50/50.

**8.** Emulsion séchée selon l'une des revendications précédentes **caractérisée en ce que** au moins un bloc, de préférence au moins deux, dérive de monomères ethylèniquement insaturés, de préférence mono-alpha-ethylèniquement insaturés.

**9.** Procédé de préparation d'une émulsion séchée selon l'une des revendications précédentes, **caractérisé en ce qu'**il comprend les étapes suivantes:

a) préparer une émulsion comprenant une phase aqueuse dans laquelle est dispersée la phase hydrophobe liquide, l'émulsion comprenant le copolymère hydrosoluble ou hydrodispersable seul ou en mélange avec un autre polymère hydrosoluble ou hydrodispersable, et éventuellement un composé émulsifiant en plus, et
b) éliminer l'eau, pour obtenir une émulsion séchée,
c) éventuellement mettre l'émulsion séchée sous forme de poudre ou de granulés,
d) récupérer l'émulsion séchée.

**10.** Procédé selon la revendication 9, **caractérisé en ce que** lors de l'étape b) l'eau est éliminée par évaporation en couche mince, lyophilisation, ou par atomisation de l'émulsion.

**11.** Procédé selon l'une des revendications 9 à 10, **caractérisé en ce que** la proportion pondérale entre la phase aqueuse et la phase hydrophobe comprise entre 5 et 99% en **en ce que** l'eau comprend moins de 0,5 mol/L de sel.

**12.** Ultilsation de l'émulsion séchée selon l'une des revendications 1 à 8, dans des formulations phytosanitaires, dans des formulations pour le soin du linge, dans des formulations pour lave-vaisselle, dans des formulations cosmétiques, dans des lingettes pour les soins domestiques ou pour les soins de la peau ou pour le soin des bébés, dans des couches-culottes, dans des formulations de matériaux de bâtiments et/ou de travaux publics, dans des formulations de revêtements de surfaces, par exemple dans des peintures.

**Patentansprüche**

**1.** Getrocknete Emulsion, die eine Matrix umfasst, die ein wasserlösliches oder wasserdispergierbares Polymer umfasst, in der eine flüssige hydrophobe Phase dispergiert ist, **dadurch gekennzeichnet, dass**:

- das wasserlösliche oder wasserdispergierbare Polymer, das in der Matrix enthalten ist, ein Zweiblock-Copolymer A-B oder ein Dreiblock-Copolymer A-B-A ist, bei dem der Block A hydrophil ist und der Block B hydrophob ist, allein oder als Gemisch mit einem anderen wasserlöslichen oder wasserdispergierbaren Polymer umfasst,

- das Gewichtsverhältnis zwischen der hydrophoben Phase und der Matrix größer als 50/50, bevorzugt größer als 70/30, bevorzugt größer als 80/20 ist, und
- die Matrix mindestens 50 Gew.-% wasserlösliches oder wasserdispergierbares Polymer umfasst.

**2.** Getrocknete Emulsion nach dem vorhergehenden Anspruch, **dadurch gekennzeichnet, dass** sie ferner eine emulgierende Verbindung umfasst.

**3.** Getrocknete Emulsion nach einem der vorhergehenden Ansprüche, **dadurch gekennzeichnet, dass** die Matrix mindestens 80 Gew.-% wasserlösliches oder wasserdispergierbares Polymer umfasst.

**4.** Getrocknete Emulsion nach einem der vorhergehenden Ansprüche, **dadurch gekennzeichnet, dass** die Matrix nicht mehr als 20 Gew.-%, bevorzugt nicht mehr als 10 Gew.-% eines Salzes umfasst.

**5.** Getrocknete Emulsion nach einem der vorhergehenden Ansprüche, **dadurch gekennzeichnet, dass** die hydrophobe Phase eine Verbindung umfasst, die ausgewählt ist aus:

- Siliconen,
- Duftstoffen,
- organischen, mineralischen oder pflanzlichen Ölen, und den Derivaten dieser Öle, wobei die Öle und Derivate nicht mit Wasser mischbar sind,

- organischen Lösemitteln, die nicht mit Wasser mischbar sind,
- nicht wasserlöslichen oder wasserdispergierbaren Wirkstoffen,
- deren Gemischen, in Lösungen, Dispersion oder Emulsionen.

**6.** Getrocknete Emulsion nach einem der vorhergehenden Ansprüche, **dadurch gekennzeichnet, dass** die hydrophobe Phase eine Zusammensetzung ist, die eine intermediäre Phase umfasst, die nicht mit Wasser mischbar ist, in der eine innere Phase dispergiert ist, die nicht mit der intermediären Phase mischbar ist oder in der intermediären Phase nicht löslich ist.

**7.** Getrocknete Emulsion nach einem der vorhergehenden Ansprüche, **dadurch gekennzeichnet, dass** das Gewichtsverhältnis zwischen dem Block (den Blöcken) A und dem Block (den Blöcken) B größer oder gleich 50/50 ist.

**8.** Getrocknete Emulsion nach einem der vorhergehenden Ansprüche, **dadurch gekennzeichnet, dass** mindestens ein Block, bevorzugt mindestens zwei Blöcke von ethylenisch ungesättigten, bevorzugt mono-alphaethylenisch ungesättigten Monomeren abgeleitet ist (sind) .

**9.** Verfahren zur Herstellung einer getrockneten Emulsion nach einem der vorhergehenden Ansprüche, **dadurch gekennzeichnet, dass** es die folgenden Schritte umfasst:

a) Herstellen einer Emulsion, die eine wässrige Phase umfasst, in der die flüssige hydrophobe Phase dispergiert ist, wobei die Emulsion das wasserlösliche oder wasserdispergierbare Block-Copolymer allein oder als Gemisch mit einem anderen wasserlöslichen oder wasserdispergierbaren Polymer und gegebenenfalls ferner einer emulgierenden Verbindung umfasst, und
b) Entfernen des Wassers, um eine getrocknete Emulsion zu erhalten,
c) gegebenenfalls Umwandeln der getrockneten Emulsion in die Form von Pulver oder Granulat,
d) Rückgewinnen der getrockneten Emulsion.

**10.** Verfahren nach Anspruch 9, **dadurch gekennzeichnet, dass** in Schritt b) das Wasser durch Dünnschichtverdampfung, Lyophilisierung oder durch Sprühtrocknung der Emulsion entfernt wird.

**11.** Verfahren nach einem der Ansprüche 9 bis 10, **dadurch gekennzeichnet, dass** der Gewichtsanteil zwischen der wässrigen Phase und der hydrophoben Phase im Bereich zwischen 5 und 99 % liegt, und dadurch, dass das Wasser mindestens 0,5 Mol/l Salz umfasst.

**12.** Verwendung der getrockneten Emulsion nach einem der Ansprüche 1 bis 8 in Pflanzenschutzformulierungen, in Formulierungen zur Wäschepflege, in Formulierungen für die Geschirrspülmaschine, in kosmetischen Formulierungen, in Tüchern zur Haushaltspflege oder zur Hautpflege oder zur Babypflege, in Windelhosen, in Formulierungen für Hoch- und/oder Tiefbaustoffe, in Formulierungen zur Oberflächenbehandlung, zum Beispiel in Farben.

**Claims**

**1.** Dried emulsion comprising a matrix comprising a water-soluble or water-dispersible polymer and having dispersed therein a liquid hydrophobic phase, **characterized in that**:

- the water-soluble or water-dispersible polymer comprised in the matrix is an A-B diblock copolymer or A-B-A triblock copolymer wherein the block A is hydrophilic and the block B is hydrophobic, said copolymer being alone or in a mixture with another water-soluble or water-dispersible polymer,
- the weight ratio between the hydrophobic phase and the matrix is greater than 50/50, preferably greater than 70/30, preferably greater than 80/20, and
- the matrix comprises at least 50% by weight of water-soluble or water-dispersible polymer.

**2.** Dried emulsion according to the preceding claim, **characterized in that** it further comprises an emulsifier compound.

**3.** Dried emulsion according to either of the preceding claims, **characterized in that** the matrix comprises at least 80% by weight of water-soluble or water-dispersible polymer.

**4.** Dried emulsion according to one of the preceding claims, **characterized in that** the matrix comprises not more than 20%, preferably not more than 10%, by weight of a salt.

5. Dried emulsion according to one of the preceding claims, **characterized in that** the hydrophobic phase comprises a compound selected from:

- silicones,
- fragrances,
- organic, mineral or vegetable oils, and derivatives of these oils, said oils and derivatives being non-water-miscible,
- non-water-miscible organic solvents,
- non-water-soluble or -dispersible active substances,
- mixtures thereof, as solutions, dispersions or emulsions.

6. Dried emulsion according to one of the preceding claims, **characterized in that** the hydrophobic phase is a composition comprising a non-water-miscible intermediate phase having dispersed therein an internal phase which is not miscible in the intermediate phase or not soluble in the intermediate phase.

7. Dried emulsion according to one the preceding claims, **characterized in that** the weight ratio between the block(s) A and the block(s) B is greater than or equal to 50/50.

8. Dried emulsion according to one of the preceding claims, **characterized in that** at least one block, preferably at least two, derives from ethylenically unsaturated monomers, preferably mono-alpha-ethylenically unsaturated monomers.

9. Process for preparing a dried emulsion according to one of the preceding claims, **characterized in that** it comprises the following steps:

a) preparing an emulsion comprising an aqueous phase having dispersed therein the liquid hydrophobic phase, the emulsion comprising the water-soluble or water-dispersible block copolymer alone or in a mixture with another water-soluble or water-dispersible polymer, and optionally, further, an emulsifier compound, and
b) removing the water to give a dried emulsion,
c) optionally converting the dried emulsion into powder or granules,
d) recovering the dried emulsion.

10. Process according to Claim 9, **characterized in that** in step b) the water is removed by thin-film evaporation, lyophilization, or by spray-drying the emulsion.

11. Process according to either of Claim 9 to 10, **characterized in that** the proportion by weight between the aqueous phase and the hydrophobic phase is between 5% and 99% and **in that** the water comprises less than 0.5 mol/L of salt.

12. Use of the dried emulsion according to one of Claims 1 to 8 in crop protection formulations, in laundrycare formulations, in dishwashing formulations, in cosmetic formulations, in household or skincare or babycare wipes, in diaper pants, in building-material and/or civil-engineering formulations or in surface-coating formulations, such as in paints, for example.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9715385 A
- WO 0026280 A
- WO 0232563 A
- WO 03006148 A
- WO 9955819 A
- US 3971852 A
- WO 9715386 A
- WO 9715387 A
- WO 9938611 A
- WO 9938945 A
- WO 03002242 A
- WO 9858974 A
- WO 0075207 A
- WO 0142312 A
- WO 9801478 A
- WO 0208307 A
- WO 9931144 A
- WO 0226836 A
- WO 03082928 A
- WO 0210223 A
- WO 9903894 A
- WO 9630421 A
- WO 0039169 A
- WO 0037507 A
- WO 9601245 A
- WO 03055584 A

**Littérature non-brevet citée dans la description**

- **OTU et al.** *Makromol. Chem. Rapid. Commun.,* 1982, vol. 3, 127
- **TATEMOTO et al.** Jap. Daikin Kogyo Co ltd, 1975, vol. 50, 991
- **MATYJASZEWSKI et al.** *Macromolecules,* 1995, vol. 28, 2093
- **D. BRAUN et al.** *Dans Macromol. Symp.,* 1996, vol. 111, 63
- **WAYLAND et al.** *Dans J.Am.Chem.Soc.,* 1994, vol. 116, 7973
- **PAUL BECHER.** ENCYCLOPEDIA of EMULSIONS TECHNOLOGY. MARCEL DEKKER INC, 1983, vol. 1 à 3